# EUROPEAN PATENT APPLICATION

(11) **EP 4 765 415 A1**
(43) Date of publication of application: **24.06.2026**
(21) Application number: 24877499.4
(22) Date of filing: 08.10.2024
(51) Int. Cl.: H01M 50/342, H01M 50/242, H01M 50/204

(54) **BATTERY MODULE AND BATTERY PACK**

(30) Priority: 10.10.2023 KR 20230134577
(71) Applicant: LG Energy Solution, Ltd., Seoul 07335 (KR)
(72) Inventor: YUN, Hyun Woong, Daejeon 34122 (KR); BAE, Sang Ho, Daejeon 34122 (KR)
(74) Representative: Plasseraud IP
(86) International application number: PCT/KR2024/015277
(87) International publication number: WO 2025/079962

(57) **Abstract**

The present disclosure relates to a battery module and a battery pack, and more specifically, to a battery module and a battery pack capable of regulating internal pressure by capturing internal gas. A battery module according to an embodiment of the present disclosure includes a plurality of battery cells, a gas capture unit disposed at a position adjacent to the battery cell, and a module case accommodating the plurality of battery cells and the gas capture unit, wherein the gas capture unit is broken when the internal pressure of the module case reaches a preset pressure, and captures gas to regulate the internal pressure of the module case, so that the module case of the battery module may be prevented from being damaged by the internal pressure by blocking the internal pressure of the battery module from rising above a certain level.

## Description

### TECHNICAL FIELD

### CROSS-REFERENCE TO RELATED APPLICATIONS

The present application claims priority to Korean Patent Application No. 10-2023-0134577 filed on October 10, 2023 in the Republic of Korea, the disclosures of which are incorporated herein by reference.

### TECHNICAL FIELD

The present disclosure relates to a battery module and a battery pack, and more specifically, to a battery module and a battery pack capable of regulating internal pressure by capturing internal gas.

### BACKGROUND ART

A secondary battery is a battery that can be charged and discharged, unlike a primary battery that cannot be recharged. A low-capacity secondary battery is used in small portable electronic devices such as mobile phones, laptop computers and camcorders, while a high-capacity secondary battery is widely used as a power source for driving motors in hybrid vehicles or the like.

Such a secondary battery may be used in various forms. For example, the secondary battery may be used in the form of a battery module in which a plurality of battery cells capable of being charged and discharged are electrically connected, a battery pack in which a plurality of battery modules are electrically connected, and a cell to pack in which a plurality of battery cells are accommodated in a pack case.

Here, the battery cell includes an electrode assembly in which a positive electrode, a negative electrode and a separator are stacked, and an exterior material that accommodates the electrode assembly. At this time, a metal can or a pouch in which a resin layer is formed on the surface of a metal substrate layer may be used as the exterior material, and the interior of this exterior material is filled with an electrolyte solution. That is, the battery cell has a structure in which the electrode assembly is accommodated inside the metal can or pouch in a state of being impregnated with an electrolyte solution.

On the other hand, when such battery cells are repeatedly charged and discharged, gas is generated due to various causes, such as an increase in the internal temperature of the battery cell to decompose the electrolyte solution, or a chemical reaction of an additive in the electrolyte solution to occur during the migration of positive ions. At this time, the gas generated from the battery cell increases the internal pressure of the battery module or battery pack in which the battery cells are accommodated, and in the past, there was a problem that the case of the battery module or battery pack expanded or the battery cells inside the case were damaged due to this increase in internal pressure.

### SUMMARY

### TECHNICAL PROBLEM

The present disclosure is designed to solve the problems of the related art, and therefore the present disclosure is directed to providing a battery module and a battery pack capable of capturing gas generated from a plurality of battery cells to prevent the internal pressure of a case accommodating the battery cells from rising above a certain level and to prevent volume expansion of the case.

### TECHNICAL SOLUTION

A battery module according to Embodiment 1 of the present disclosure includes a plurality of battery cells; a gas capture unit disposed at a position adjacent to the battery cell; and a module case accommodating the plurality of battery cells and the gas capture unit, wherein the gas capture unit is broken when the internal pressure of the module case reaches a preset pressure, and captures gas to regulate the internal pressure of the module case.

The gas capture unit may have a box shape forming an internal space in a negative pressure state.

The plurality of battery cells may be arranged in a row inside the module case, and the gas capture unit may be installed between the plurality of battery cells.

The gas capture unit may be installed between each of the plurality of battery cells.

A cut line for inducing breakage may be formed on the surface of the gas capture unit.

The gas capture unit may be broken at a pressure of 1 MPa or more and 4 MPa or less.

The gas capture unit may be made of a metal or plastic material.

The gas capture unit may be crushed at a pressure of 0.1 MPa or more and less than 1 MPa, and may be broken at a pressure of 1 MPa or more and 4 MPa or less.

The gas capture unit may be made of titanium or tungsten.

In a battery module according to Embodiment 2 of the present disclosure, the gas capture unit includes a first gas capture unit installed between at least some of the battery cells among the plurality of battery cells.

The gas capture unit may further include a second gas capture unit installed adjacent to the inner surfaces of one side and the other side of the module case in the length direction.

The plurality of battery cells, the first gas capture unit, and the second gas capture unit may be arranged in a row along the length direction of the module case.

Four of the battery cells may be arranged consecutively to form one battery cell group, and the first gas capture unit may be installed between each of the neighboring battery cell groups.

A battery module according to Embodiment 3 of the present disclosure further includes a shock absorbing member installed inside the module case and contracting when an external force is applied.

The shock absorbing member may include at least one of a first shock absorbing member installed between at least some of the battery cells among the plurality of battery cells; and a second shock absorbing member installed adjacent to the inner surface of the module case.

The plurality of battery cells, the gas capture unit, and the shock absorbing member may be arranged in a row inside the module case.

The shock absorbing member may be made of a polyurethane material.

A battery pack according to Embodiment 4 of the present disclosure includes a plurality of battery modules.

A battery pack according to Embodiment 5 of the present disclosure includes a plurality of battery cells; a gas capture unit formed with a negative pressure therein and disposed at a position adjacent to the battery cell; and a pack case accommodating the plurality of battery cells and the gas capture unit, wherein the gas capture unit is broken when the internal pressure of the pack case reaches a preset pressure, and captures gas to regulate the internal pressure of the pack case.

### ADVANTAGEOUS EFFECTS

A battery module according to an embodiment of the present disclosure includes a plurality of battery cells, a gas capture unit disposed at a position adjacent to the battery cell, and a module case accommodating the plurality of battery cells and the gas capture unit, wherein the gas capture unit is broken when the internal pressure of the module case reaches a preset pressure, and captures gas to regulate the internal pressure of the module case, so that the module case of the battery module may be prevented from being damaged by the internal pressure by blocking the internal pressure of the battery module from rising above a certain level.

### BRIEF DESCRIPTION OF THE DRAWINGS

FIG. 1 is a perspective view showing a battery module according to Embodiment 1 of the present disclosure.
FIG. 2 is a cross-sectional view taken along line A-A of FIG. 1.
FIG. 3 is a perspective view showing a gas capture unit of a battery module according to Embodiment 1 of the present disclosure.
FIG. 4 is a view for describing a cut line formed in a gas capture unit in a battery module according to Embodiment 1 of the present disclosure.
FIG. 5 is a cross-sectional view showing an internal view of a battery module according to Embodiment 2 of the present disclosure.
FIG. 6 is a cross-sectional view showing a state in which a plurality of battery cells form one battery cell group in a battery module according to Embodiment 2 of the present disclosure.
FIG. 7 is a cross-sectional view showing an internal view of a battery module according to Embodiment 3 of the present disclosure.
FIG. 8 is a cross-sectional view showing an internal view of a battery pack according to Embodiment 5 of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a battery module and a battery pack according to the present disclosure will be described with reference to the drawings.

### Embodiment 1

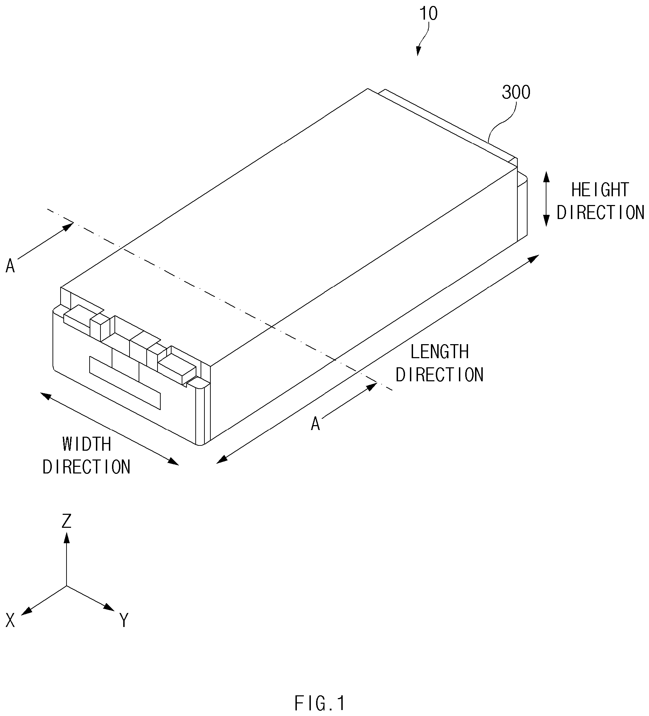

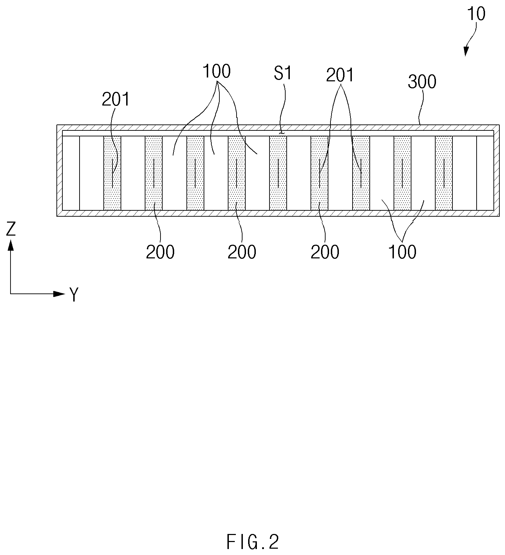

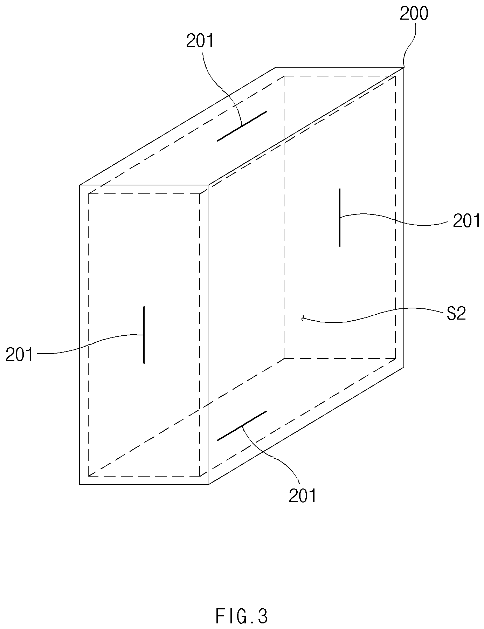

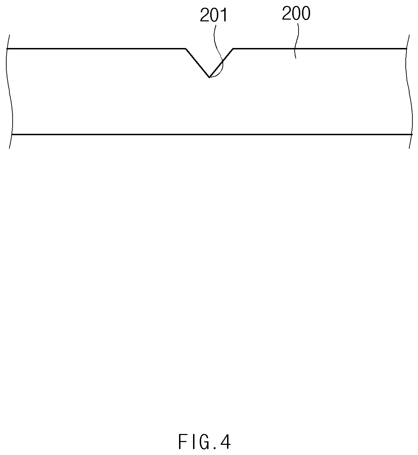

FIG. 1 is a perspective view showing a battery module according to Embodiment 1 of the present disclosure, and FIG. 2 is a cross-sectional view taken along line A-A of FIG. 1. FIG. 3 is a perspective view showing a gas capture unit of a battery module according to Embodiment 1 of the present disclosure, and FIG. 4 is a view for describing a cut line formed in a gas capture unit in a battery module according to Embodiment 1 of the present disclosure.

Referring to FIGS. 1 and 2, a battery module 10 according to Embodiment 1 of the present disclosure includes a plurality of battery cells 100; a gas capture unit 200 disposed at a position adjacent to the battery cell 100; and a module case 300 accommodating the plurality of battery cells 100 and the gas capture unit 200, wherein the gas capture unit 200 is broken when the internal pressure of the module case 300 reaches a preset pressure, and captures gas to regulate the internal pressure of the module case 300. In this case, the module case 300 of the battery module 10 may be prevented from being damaged by the internal pressure by blocking the internal pressure of the battery module 10 from rising above a certain level.

The battery module 10 is a battery module including a plurality of battery cells 100, and the battery cells 100 may be electrically connected within the battery module 10. At this time, there is no particular limitation on the electrical connection structure of the battery cells 100. For example, within the battery module 10, the battery cells 100 may all be connected in series or in parallel. Additionally, the battery module 10 may have a structure in which the series/parallel connections of the battery cells 100 are mixed.

The battery cell 100 is a secondary battery that can be charged and discharged, and may include an electrode assembly including a positive electrode, a negative electrode and a separator, an electrode lead connected to the electrode assembly, and an exterior material covering the electrode assembly.

The positive electrode includes a positive electrode current collector and a positive electrode active material coated on the positive electrode current collector, and a positive electrode uncoated portion of the positive electrode current collector that is not coated with the positive electrode active material may be a positive electrode tab. At this time, the positive electrode tab may be electrically connected to the positive electrode lead.

The negative electrode includes a negative electrode current collector and a negative electrode active material coated on the negative electrode current collector, and a negative electrode uncoated portion of the negative electrode current collector that is not coated with the negative electrode active material may be a negative electrode tab. At this time, the negative electrode tab may be electrically connected to the negative electrode lead.

The separator is a membrane interposed between the positive electrode and the negative electrode to block contact between the positive electrode and the negative electrode, and may be made of an insulating material. At this time, the separator may have a plurality of pores through which positive ions such as lithium pass.

The electrode assembly is a stack including a positive electrode, a negative electrode and a separator, and may have various structures. For example, the electrode assembly may be a stack type electrode assembly in which a positive electrode, a negative electrode and a separator are stacked, a stack-folding type electrode assembly in which a positive electrode, a negative electrode and a separator are stacked and folded, or a jelly-roll type electrode assembly in which a positive electrode, a negative electrode and a separator are stacked and wound.

The exterior material in which the electrode assembly is accommodated may be made of various materials. For example, the exterior material may be formed of a metal can, or may be formed of a pouch in which a resin layer is coated on both surfaces of the metal substrate layer.

The first resin layer coated on the outer surface of the metal substrate layer should have excellent resistance to the external environment in order to protect the electrode assembly from the outside, and thus the first resin layer is required to have excellent tensile strength and durability relative to its thickness. Materials for the first resin layer may include a polyester-based resin such as polyethylene terephthalate (PET) and polyethylene naphthalate (PEN), a polyolefin-based resin such as polyethylene and polypropylene, a polystyrene-based resin such as polystyrene, a polyvinyl chloride-based resin, a polyvinylidene chloride-based resin, and the like.

The second resin layer coated on the inner surface of the metal substrate layer forms a sealing portion that is fused by heat, and the second resin layer may be made of a polyolefin-based resin material. For example, materials for the second resin layer may include casted polypropylene (CPP), chlorinated polypropylene, polyethylene, ethylene propylene copolymer, polyethylene and acrylic acid copolymer, polypropylene and acrylic acid copolymer, and the like.

The metal substrate layer may serve as a substrate that maintains mechanical strength and a barrier layer that prevents the penetration of moisture and oxygen. The metal substrate layer may be made of aluminum or an aluminum alloy so as to exhibit the function of improving the strength of the battery case in addition to the function of preventing the inflow or leakage of foreign substances such as gas and moisture. The aluminum alloy may include alloy numbers 8079, 1N30, 8021, 3003, 3004, 3005, 3104, 3105, and the like, which may be used alone or in combination of two or more.

Meanwhile, the gas capture unit 200 is accommodated inside the module case 300, and may capture gas generated when the battery cells 100 inside the module case 300 are repeatedly charged and discharged. At this time, when the pressure of the receiving space S1 in which the battery cells 100 inside the module case 300 are accommodated reaches a preset pressure, the gas capture unit 200 may be broken to capture the gas in the receiving space S1. Here, the preset pressure may mean a pressure of 1 MPa or more and 4 MPa or less.

Specifically, the internal space S2 of the gas capture unit 200 is empty, and when the pressure of the receiving space S1 of the module case 300 reaches a preset pressure, the gas capture unit 200 may be broken due to the pressure difference between the receiving space S1 and the internal space S2. Thereafter, the gas in the receiving space S1 flows into the internal space S2, and the pressure inside the module case 300 may be regulated through this.

The module case 300 is a case that accommodates a plurality of battery cells 100 and one or more gas capture units 200, and may be configured in various ways. The module case 300 may have a cuboid box shape with the receiving space S1 formed therein. Additionally, the module case 300 may be made of various materials. For example, a metal such as aluminum and iron, or a material such as a thermosetting resin may be used for the module case 300.

Meanwhile, as shown in FIG. 3, the gas capture unit 200 may have a cuboid box shape forming the internal space S2 in a negative pressure state. The pressure of the internal space S2 is formed with a negative pressure, and thus the pressure of the internal space S2 inside the gas capture unit 200 may be formed to be lower than the pressure of the receiving space S1 outside the gas capture unit 200.

That is, the pressure of the internal space S2 of the gas capture unit 200 is formed to be lower than the pressure of the receiving space S1 of the module case 300, and may be disposed at a position adjacent to the battery cell 100 so as to be broken when the pressure of the receiving space S1 of the module case 300 increases by the gas generated from the battery cell 100.

The plurality of battery cells 100 and the gas capture unit 200 may be disposed in various ways inside the module case 300. For example, the plurality of battery cells 100 may be arranged in a row inside the module case 300, and the gas capture unit 200 may be installed between the plurality of battery cells 100. Additionally, the gas capture unit 200 may be installed between each of the plurality of battery cells 100.

Meanwhile, a cut line 201 for inducing breakage may be formed on the surface of the gas capture unit 200. In this case, when the pressure of the receiving space S1 of the module case 300 increases, the gas capture unit 200 is quickly broken along the cut line 201, and thus, since the amount of pressure change in the receiving space S1 of the module case 300 decreases, there is an advantageous effect of reducing the possibility that the module case 300 is broken by internal pressure.

The cut line 201 may be formed in a form that induces breakage of the gas capture unit 200 so that the inside and the outside of the gas capture unit 200 communicate with each other. The cut line 201 may have various shapes. For example, the cut line 201 may be formed linearly, or may be formed in the shape of a figure such as a circle, a rectangle, or the like.

Meanwhile, as shown in FIG. 4, the cut line 201 may be a notch formed on the surface of the gas capture unit 200, and the notch may include inclined surfaces formed in opposite directions on both sides of the center so that stress is concentrated at the center. That is, stress is concentrated at the center of the cut line 201, and thus, even when the same or similar pressure is applied to the surface of the gas capture unit 200 as a whole where the cut line 201 is formed, the cut line 201 may be broken first.

Additionally, the cut lines 201 may be formed in plurality on the surface of the gas capture unit 200, and the cut lines 201 may be formed in various areas of the gas capture unit 200. For example, the cut lines 201 may be formed on four side surfaces of the surfaces of the hexahedral gas capture unit 200 that are not in contact with the battery cell 100.

Meanwhile, the gas capture unit 200 may be made of various materials. For example, the gas capture unit 200 may be made of a metal or plastic material. Specifically, the gas capture unit 200 may be made of a plastic material such as polyethylene (PE), polypropylene (PP), polystyrene (PS), polyethylene terephthalate (PET), polyamide (PA), polyester (PES), polyvinyl chloride (PVC), polyurethane (PU), polycarbonate (PC), and polyvinylidene chloride (PVDC), or may be made of a metal such as aluminum, copper, lead, zinc, tin, iron, stainless steel, chromium, and nickel, or an alloy material of two or more of these.

In particular, the gas capture unit 200 may be made of titanium or tungsten. In this case, the gas capture unit 200 may be crushed at a pressure of 0.1 MPa or more and less than 1 MPa, and may be broken at a pressure of 1 MPa or more and 4 MPa or less. At this time, the gas capture unit 200 may be crushed even at a pressure of 1 MPa or less to absorb the shock, so that the amount of pressure change in the receiving space S1 within the module case 300 may be smaller. That is, in this case, there is an advantageous effect of blocking the module case 300 from being damaged by internal pressure.

### Embodiment 2

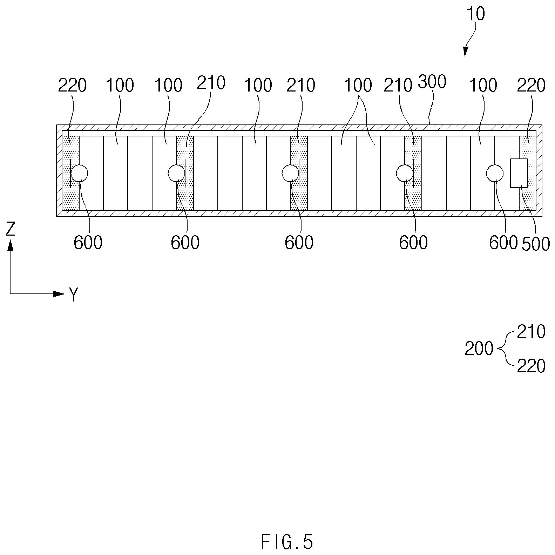

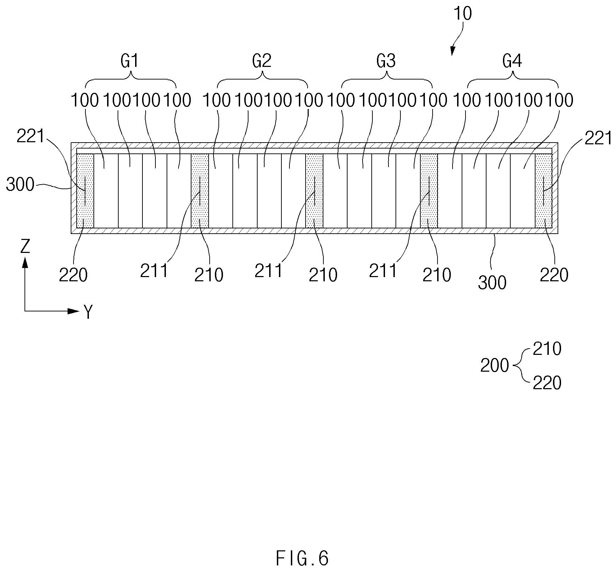

FIG. 5 is a cross-sectional view showing an internal view of a battery module according to Embodiment 2 of the present disclosure, and FIG. 6 is a cross-sectional view showing a state in which a plurality of battery cells form one battery cell group in a battery module according to Embodiment 2 of the present disclosure.

The battery module according to Embodiment 2 of the present disclosure differs from Embodiment 1 in that the gas capture unit is divided into a first gas capture unit and a second gas capture unit. The contents common to Embodiment 1 will be omitted as much as possible, and Embodiment 2 will be described focusing on the differences. That is, it is obvious that contents not described in Embodiment 2 may be regarded as contents of Embodiment 1 if necessary.

Referring to FIG. 5, in the battery module 10 according to Embodiment 2 of the present disclosure, the gas capture unit 200 may include a first gas capture unit 210 installed between at least some of the battery cells 100 among the plurality of battery cells 100. The first gas capture unit 210 may be installed in various ways between the battery cells 100. For example, the first gas capture unit 210 may be installed only between some of the battery cells 100 among the plurality of battery cells 100, or may be installed between each of the plurality of battery cells 100.

At this time, a first cut line 211 may be formed in the first gas capture unit 210. The first cut line 211 may have various shapes. For example, the first cut line 211 may be formed linearly, or may be formed in the shape of a figure such as a circle, a rectangle, or the like.

The first cut line 211 may be a notch formed on the surface of the first gas capture unit 210, and the notch may include inclined surfaces formed in opposite directions on both sides of the center so that stress is concentrated at the center. That is, stress is concentrated at the center of the first cut line 211, and thus, even when the same or similar pressure is applied to the surface of the first gas capture unit 210 as a whole where the first cut line 211 is formed, the first cut line 211 may be broken first.

Additionally, the first cut lines 211 may be formed in plurality on the surface of the first gas capture unit 210, and the first cut lines 211 may be formed in various areas of the first gas capture unit 210. For example, the first cut lines 211 may be formed on four side surfaces of the surfaces of the hexahedral first gas capture unit 210 that are not in contact with the battery cell 100.

The gas capture unit 200 may further include a second gas capture unit 220 installed adjacent to the inner surfaces of one side and the other side of the module case 300 in the length direction. The second gas capture unit 220 may be installed between the battery cell 100 and the inner surface of one side of the module case 300. Additionally, the second gas capture unit 220 may also be installed between the battery cell 100 and the inner surface of the other side of the module case 300.

At this time, a second cut line 221 may be formed in the second gas capture unit 220. The second cut line 221 may have various shapes. For example, the second cut line 221 may be formed linearly, or may be formed in the shape of a figure such as a circle, a rectangle, or the like.

The second cut line 221 may be a notch formed on the surface of the second gas capture unit 220, and the notch may include inclined surfaces formed in opposite directions on both sides of the center so that stress is concentrated at the center. That is, stress is concentrated at the center of the second cut line 221, and thus, even when the same or similar pressure is applied to the surface of the second gas capture unit 220 as a whole where the second cut line 221 is formed, the second cut line 221 may be broken first.

Additionally, the second cut lines 221 may be formed in plurality on the surface of the second gas capture unit 220, and the second cut lines 221 may be formed in various areas of the second gas capture unit 220. For example, the second cut lines 221 may be formed on four side surfaces of the surfaces of the hexahedral second gas capture unit 220 that are not in contact with the battery cell 100.

Meanwhile, the plurality of battery cells 100, the first gas capture unit 210, and the second gas capture unit 220 may be arranged in a row along the length direction of the module case 300. In this case, the second gas capture unit 220 may be installed adjacent to the inner surface of one side of the module case 300 in the length direction and/or the inner surface of the other side of the module case 300 in the length direction.

Meanwhile, a thermoelectric module 500 and a heating pad 600 may be installed in the battery module 10. The thermoelectric module 500 may measure the temperature of the battery cells 100 within the module case 300, and the heating pad 600 may transfer heat to the inside of the battery module 10 to increase the temperature of the battery cells 100. Here, the heating pad 600 may be operated according to the temperature value of the battery cells 100 measured by the thermoelectric module 500.

There is no particular limitation on the installation location of the thermoelectric module 500 and the heating pad 600. For example, as shown in FIG. 5, the thermoelectric module 500 may be installed between the battery cells 100 or between the battery cells 100 and the first gas capture unit 210, and the heating pad 600 may be installed on one side of the module case 300.

Meanwhile, referring to FIG. 6, in the battery module 10 according to Embodiment 2 of the present disclosure, four of the battery cells 100 are arranged consecutively to form one battery cell group. Specifically, in the battery module 10, the first to fourth groups G1, G2, G3, G4, each of which is composed of four battery cells 100, may be arranged along the length direction of the module case 300.

A gas capture unit 200 may be installed inside the battery module 300. At this time, the gas capture unit 200 may include a first gas capture unit 210 installed between neighboring battery groups and a second gas capture unit 220 installed between the battery groups and the module case 300.

Specifically, the first gas capture unit 210 may be installed between neighboring battery cell groups. For example, the first gas capture unit 210 may be installed in at least one of the space between the first group G1 and the second group G2, the space between the second group G2 and the third group G3, and the space between the third group G3 and the fourth group G4.

Additionally, the first gas capture unit 210 may be installed between each of the neighboring battery cell groups. As shown in FIG. 6, the first gas capture unit 210 may be installed between the first group G1 and the second group G2, between the second group G2 and the third group G3, and between the third group G3 and the fourth group G4, respectively.

The second gas capture unit 220 may be installed between the battery cell group and the inner surface of the module case 300. For example, the second gas capture unit 220 may be installed between the first group G1 and the inner surface of one side of the module case 300 in the length direction. Additionally, the second gas capture unit 220 may be installed between the fourth group G4 and the inner surface of the other side of the module case 300 in the length direction.

### Embodiment 3

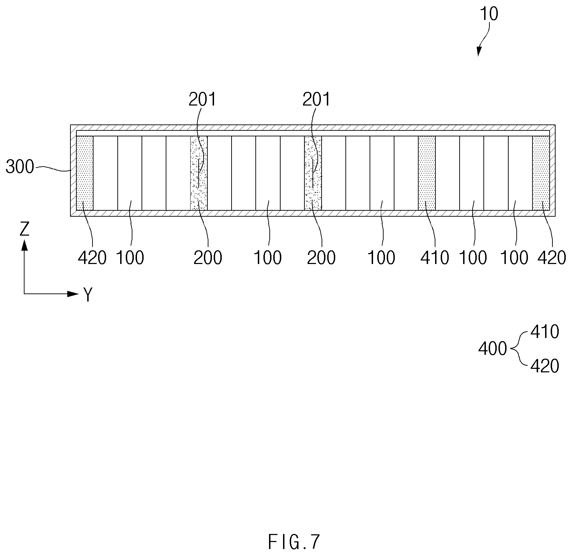

FIG. 7 is a cross-sectional view showing an internal view of a battery module according to Embodiment 3 of the present disclosure.

The battery module according to Embodiment 3 of the present disclosure differs from Embodiments 1 and 2 in that it further includes a shock absorbing member. The contents common to Embodiments 1 and 2 will be omitted as much as possible, and Embodiment 3 will be described focusing on the differences. That is, it is obvious that contents not described in Embodiment 3 may be regarded as contents of Embodiments 1 and 2 if necessary.

Referring to FIG. 7, the battery module 10 according to Embodiment 3 of the present disclosure includes a shock absorbing member 400 installed inside the module case 300 and contracting when an external force is applied. In this case, even when the battery cell 100 is swelling due to repeated charging and discharging, the shock absorbing member 400 may contract by the increased volume of the battery cell 100, and thus there is an advantageous effect of preventing the module case 300 from being damaged even when the battery cell 100 is swelling.

The shock absorbing member 400 is an elastic member that contracts when an external force is applied, and may be configured in various ways. For example, the shock absorbing member 400 may be a flexible pad that contracts when an external force is applied. Additionally, the shock absorbing member 400 may be an elastic box having a hexahedral shape.

Meanwhile, the shock absorbing member 400 may include at least one of a first shock absorbing member 410 installed between at least some of the battery cells 100 among the plurality of battery cells 100 and a second shock absorbing member 420 installed adjacent to the inner surface of the module case 300.

The first shock absorbing member 410 is installed between the battery cells 100 and may contract by the increased volume of the battery cells 100 in the event of swelling of the adjacent battery cells 100. In this case, even when the volume of the battery cells 100 increases, the battery cells 100 may be prevented from colliding with each other, and thus there is an advantageous effect of preventing damage to the battery cells 100.

The first shock absorbing member 410 may be installed in various ways inside the module case 300. For example, the first shock absorbing member 410 may be installed one by one between each of the battery cells 100, and the first shock absorbing member 410 may be installed only between some of the battery cells 100 among all the battery cells 100.

The second shock absorbing member 420 is installed between the inner surface of the module case 300 and the battery cell 100, and may contract by the increased volume of the battery cell 100 in the event of swelling of the battery cell 100. Specifically, the second shock absorbing member 420 may be installed between the inner surface of one side of the module case 300 in the length direction and the battery cell 100, and between the inner surface of the other side of the module case 300 in the length direction and the battery cell 100, respectively. In this case, the second shock absorbing member 420 may contract by the increased volume of the battery cell 100 in the event of swelling of the adjacent battery cell 100, thereby preventing the module case 300 from being damaged by the swelling of the battery cell 100.

The plurality of battery cells 100, the gas capture unit 200, and the shock absorbing member 400 may be arranged in a row inside the module case 300. Specifically, the plurality of battery cells 100, the gas capture unit 200, and the shock absorbing member 400 may be arranged in a row inside the module case 300 along the length direction of the module case 300.

The shock absorbing member 400 includes a first shock absorbing member 410 and a second shock absorbing member 420, and thus the plurality of battery cells 100, the gas capture unit 200, the first shock absorbing member 410, and the second shock absorbing member 420 may be arranged in a row inside the module case 300 along the length direction of the module case 300. At this time, a cut line 201 for inducing breakage may be formed on the surface of the gas capture unit 200.

The battery cell 100, the gas capture unit 200, the first shock absorbing member 410, and the second shock absorbing member 420 may be disposed in various ways inside the module case 300. For example, as shown in FIG. 7, four battery cells 100 may be arranged continuously to form one group, the gas capture unit 200 or the first shock absorbing member 410 may be disposed between the battery groups, and the second shock absorbing member 420 may be disposed between the battery group and the module case 300. Additionally, the gas capture unit 200 or the first shock absorbing member 410 may be disposed between each of the battery cells 100.

Meanwhile, the shock absorbing member 400 may be made of various elastic materials. For example, the shock absorbing member 400 may be made of a polyurethane (PU) material. Polyurethane is an electrical insulator having high elasticity and vibration absorption, and in this case, there is an advantageous effect of effectively absorbing the swelling of the battery cell 100 and effectively protecting the electronic components within the battery module 10 from static electricity or the like of the battery cell 100.

### Embodiment 4

Embodiment 4 of the present disclosure relates to a battery pack, and the battery pack according to Embodiment 4 of the present disclosure may include a plurality of battery modules 10. Specifically, the battery modules 10 described in Embodiments 1 to 3 are electrically connected inside the battery pack, and the battery pack may further include a battery management system (BMS) that manages the temperature and charge/discharge status of the plurality of battery modules 10, a fuse, a cooling device, and the like.

Such a battery pack may be applied to various means of transportation such as an electric bicycle, an electric vehicle, and a hybrid vehicle. Additionally, the application of the battery pack is not limited to the means of transportation, and the battery pack may be applied to various electronic devices capable of using battery modules.

### Embodiment 5

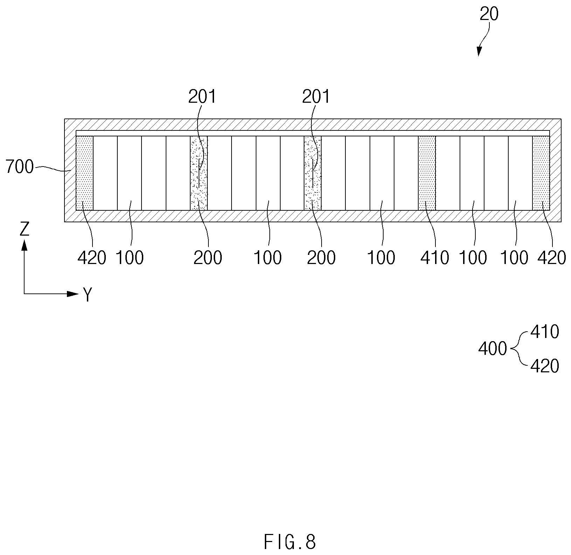

Embodiment 5 of the present disclosure relates to a cell-to-pack, which is a battery pack where battery cells, not battery modules, are accommodated inside a pack case, and FIG. 8 is a cross-sectional view showing an internal view of a battery pack according to Embodiment 5 of the present disclosure.

Referring to FIG. 8, a battery pack 20 according to Embodiment 5 of the present disclosure includes a plurality of battery cells 100, a gas capture unit 200 formed with a negative pressure therein and disposed at a position adjacent to the battery cells 100, and a pack case 700 accommodating the plurality of battery cells 100 and the gas capture unit 200, wherein the gas capture unit 200 is broken when the internal pressure of the pack case 700 reaches a preset pressure, and may capture gas to regulate the internal pressure of the pack case 700. Here, detailed descriptions of the battery cell 100 and the gas capture unit 200 may be replaced with the above contents described in Embodiments 1 to 3.

The battery pack 20 according to Embodiment 5 of the present disclosure includes the gas capture unit 200 installed inside the pack case 700, thereby blocking the internal pressure of the battery pack 20 from rising above a certain level, and thus there is an advantageous effect of preventing the pack case 700 from being damaged by the internal pressure.

In the battery pack 20, the plurality of battery cells 100 is installed directly in the pack case 700 without being accommodated in the module case, and may be configured in various ways. The plurality of battery cells 100 are electrically connected inside the pack case 700, and the battery pack 20 may include a battery management system (BMS) that manages the temperature and charge/discharge status of the plurality of battery cells 100, a fuse, a cooling device, and the like.

Such a battery pack 20 may be applied to various means of transportation such as an electric bicycle, an electric vehicle, and a hybrid vehicle. Additionally, the application of the battery pack 20 is not limited to the means of transportation, and the battery pack 20 may be applied to various electronic devices capable of using battery cells.

The pack case 700 is a case that accommodates a plurality of battery cells 100, and may be configured in various ways. In particular, a cooling device that cools the battery cells 100 and a battery management system (BMS) that controls the charge/discharge and temperature of the battery cells 100 may be packed in the pack case 700.

Meanwhile, the battery pack 20 may further include a shock absorbing member 400. Here, detailed descriptions of the shock absorbing member 400 and the battery cell 100, the arrangement between the gas capture unit 200 and the shock absorbing member 400, and the like may be replaced with the above contents described in Embodiments 1 to 3.

Specifically, the battery pack 20 according to Embodiment 5 differs from Embodiments 1 to 3 in that the battery cell 100, the gas capture unit 200, and the shock absorbing member 400 are installed in the pack case 700 rather than in the module case 300, but the arrangement order of the battery cell 100, the gas capture unit 200, and the shock absorbing member 400 inside the pack case 700 may be substantially the same as the above arrangement order of the battery cell 100, the gas capture unit 200, and the shock absorbing member 400 inside the module case 300 described in Embodiments 1 to 3.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

| | | | |
|---|---|---|---|
| 10: | Battery module | 100: | Battery cell |
| 200: | Gas capture unit | 201: | Cut line |
| 210: | First gas capture unit | 211: | First cut line |
| 220: | Second gas capture unit | 221: | Second cut line |
| 300: | Case | 400: | Shock absorbing member |
| 410: | First shock absorbing member | 420: | Second shock absorbing member |
| 500: | Heating pad | 600: | Thermoelectric module |
| 700: | Pack case | S1: | Receiving space |
| S2: | Internal space | | |

## Claims

1. A battery module comprising:
a plurality of battery cells;
a gas capture unit disposed at a position adjacent to the battery cell; and
a module case accommodating the plurality of battery cells and the gas capture unit,
wherein the gas capture unit is broken when the internal pressure of the module case reaches a preset pressure, and captures gas to regulate the internal pressure of the module case.

2. The battery module according to claim 1,
wherein the gas capture unit has a box shape forming an internal space in a negative pressure state.

3. The battery module according to claim 1,
wherein the plurality of battery cells are arranged in a row inside the module case, and the gas capture unit is installed between the plurality of battery cells.

4. The battery module according to claim 3,
wherein the gas capture unit is installed between each of the plurality of battery cells.

5. The battery module according to claim 1,
wherein a cut line for inducing breakage is formed on the surface of the gas capture unit.

6. The battery module according to claim 1,
wherein the gas capture unit is broken at a pressure of 1 MPa or more and 4 MPa or less.

7. The battery module according to claim 1,
wherein the gas capture unit is made of a metal or plastic material.

8. The battery module according to claim 1,
wherein the gas capture unit is crushed at a pressure of 0.1 MPa or more and less than 1 MPa, and is broken at a pressure of 1 MPa or more and 4 MPa or less.

9. The battery module according to claim 8,
wherein the gas capture unit is made of titanium or tungsten.

10. The battery module according to claim 1,
wherein the gas capture unit comprises a first gas capture unit installed between at least some of the battery cells among the plurality of battery cells.

11. The battery module according to claim 10,
wherein the gas capture unit further comprises a second gas capture unit installed adjacent to the inner surfaces of one side and the other side of the module case in the length direction.

12. The battery module according to claim 11,
wherein the plurality of battery cells, the first gas capture unit, and the second gas capture unit are arranged in a row along the length direction of the module case.

13. The battery module according to claim 12,
wherein four of the battery cells are arranged consecutively to form one battery cell group, and
the first gas capture unit is installed between each of the neighboring battery cell groups.

14. The battery module according to claim 1, further comprising:
a shock absorbing member installed inside the module case and contracting when an external force is applied.

15. The battery module according to claim 14,
wherein the shock absorbing member comprises at least one of:
a first shock absorbing member installed between at least some of the battery cells among the plurality of battery cells; and
a second shock absorbing member installed adjacent to the inner surface of the module case.

16. The battery module according to claim 14,
wherein the plurality of battery cells, the gas capture unit, and the shock absorbing member are arranged in a row inside the module case.

17. The battery module according to claim 14,
wherein the shock absorbing member is made of a polyurethane material.

18. A battery pack comprising a plurality of battery modules according to any one of claims 1 to 17.

19. A battery pack comprising:
a plurality of battery cells;
a gas capture unit formed with a negative pressure therein and disposed at a position adjacent to the battery cell; and
a pack case accommodating the plurality of battery cells and the gas capture unit,
wherein the gas capture unit is broken when the internal pressure of the pack case reaches a preset pressure, and captures gas to regulate the internal pressure of the pack case.
